# EUROPEAN PATENT APPLICATION

(11) **EP 1 722 428 A1**
(43) Date of publication of application: **15.11.2006**
(21) Application number: 05010498.3
(22) Date of filing: 13.05.2005
(51) Int. Cl.: H01M 4/52

(54) **Lithium secondary battery and electrodes for use therein**

(71) Applicant: SÜD-CHEMIE AG, 80333 München (DE); Sanyo Component Europe GmbH, 81829 München (DE); SANYO ELECTRIC CO., LTD., Kobe City, Hyogo, 651-2242 (JP)
(72) Inventor: Nuspl, Gerhard, Dr., 85659 Forstern (DE); Vogler, Christian, Dr., 85368 Moosburg (DE); Yu, Denis, Dr., Hyogo-ku, Kobe City Hyogo 652-0047 (JP); Donoue, Kaznori, Hyogo-ku, Kobe City Hyogo 652-0047 (JP); Inoue, Takao, Dr., Hyogo-ku, Kobe City Hyogo 652-0047 (JP); Fietzek, Christopher, Dr., 81375 München (DE); Weydanz, Wolfgang, Dr., 81827 München (DE)
(74) Representative: Stolmár, Matthias

(57) **Abstract**

The present invention relates to a positive electrode for a rechargeable lithium ion battery comprised of single particles containing a compound of the formula LiMPO₄, whereby M is a metal selected from the group consisting of Co, Ni, Mn, Fe, Ti or combinations thereof, and whereby in a X-Ray diffraction chart of the electrode the ratio of the intensity I₁ : I₂ of two selected peaks 1 and 2 is larger than 9:1 and wherein I₁ represents essentially the intensity of peak 1 assigned to the (020) plane and I₂ represents the intensity of peak 2 assigned to the (301) plane. The invention relates further to a process for the manufacture of such a positive electrode and to a battery comprising such an electrode.

## Description

The present invention relates to the field of rechargeable lithium secondary batteries and a process for the manufacture of electrodes for use in such lithium secondary batteries.

Rechargeable lithium batteries find an increasing field of use in recent years. The possibility to miniaturize these devices makes them particularly attractive for various applications especially in the field of portable devices etc. Additionally they are strongly discussed for future use, especially in emerging high power applications like portable mechanical tools, hybrid electric vehicles etc.

Present day rechargeable lithium batteries use as the anode for example a graphitic material into which lithium is reversibly inserted, or even lithium metal. As the cathode host material, a layered or framework transition metal oxide, like LiCoO₂ or LiMn₂O₄ is commonly used (Nishi et al. US 4,959,281). Goodenough et al. (US 5,910,382, US 6,391,493 and US 6,514,640) disclosed LiFePO₄ as a new and highly efficient cathode material.

The lithium metal phosphate electrodes for lithium secondary batteries in the prior art, however, often display poor rate behaviour, hence their capacity at high rates is often far away from the nominal capacity. To improve lithium ion motion in LiFePO₄ resulting in higher lithium ion conductivity, various methods have been proposed. Though, increasing the percentage of conducting agents to values >30wt% results in packing densities too low for practical use. Further improvements have been disclosed by Armand et al. (US 2004/0033360, EP1049182 and EP 132 5526), which describe carbon coated LiFePO₄ particles. By contrast to the aforementioned layered structures of for example LiCoO₂ LiFePO₄ has an olivine structure. This means that the oxide ions form a hexagonal close packing (hcp) arrangement. The Fe ions form zig-zag chains of octahedra in alternate basal planes bridged by the tetrahedral phosphate groups. The lithium atoms occupy octahedral sites, located in the remaining basal planes. The strong covalent bonding between the oxygen and phosphorus in the phosphate units allows for greater stabilization of the structure compared to layered oxides like LiCoO₂, where the oxide layers are more weakly bound. This strong covalency stabilizes the anti-bonding Fe³⁺/Fe²⁺ state through a Fe-O-P inductive effect. The result is inter alia that LiFePO4 has an available capacity of 160 mAh/g (theoretical capacity: 170 mAh/g) compared to LiCoO₂ with 150 mAh/g (theoretical capacity: 274 mAh/g). In practice, LiFePO₄ electrodes show a large dependency of discharge capacity on current rate. The performance of the electrode is affected by both the electrical conductivity and lithium ion diffusion within the electrode.

Recently, Narang et al. (US 6,682,849 and 6,337,156)) proposed layered metal-oxide materials like LiCoO₂ and the use of such metal oxide particles with a longest dimension of about 50 µm and 20 µm respectively, in the form of flakes as electrode materials. This particular geometry should compensate for the disadvantages in the use of the layered materials. However the available capacity of these electrodes could not be significantly improved.

On the other side, the lithium metal phosphate electrodes for lithium secondary batteries in the prior art, however, often display poor rate behaviour, hence their capacity at high rates is far away from the nominal capacity.

Therefore, the problem underlying the invention is to provide novel positive electrodes, for use in lithium secondary batteries, which have a good high rate behaviour, so that the capacity of the positive electrode at a certain high rate is close to the nominal capacity.

According to the present invention, this problem is solved by a positive electrode for a rechargeable lithium ion battery, wherein the positive electrode is comprised of single particles containing a compound of the formula LiMPO₄, whereby M is a metal selected from the group consisting of Co, Ni, Mn, Fe, Ti or combinations of one or more of these metals, and whereby in a X-Ray diffraction chart of the electrode, the intensity ratio I₁ : I₂ of two selected peaks 1 and 2 is larger than 9:1 and wherein I₁ represents essentially the intensity of peak 1 assigned to the (020) planes and I₂ represents the intensity of peak 2 assigned to the (301) planes. In an especially preferred embodiment of the invention, this intensity ratio is larger than 15:1, preferably larger than 20:1, still more preferred larger than 24:1.

The afore-mentioned intensity ratio of these two peaks is an indicator for the presence of a so-called "texture effect" surprisingly found in the electrode according to the invention.

This effect was observed for the (010) planes from the group of (0k0) planes in [0k0] direction (in the literature the designation [010] often stands exemplarily for reasons of convenience for the entire group of [0k0]), thereby enabling and increasing advantageously the Li-ion transfer through the plurality of particles forming the electrode according to the invention.

Since it is in [010] direction where most of the Li-ion transfer occurs (D. Morgan et al., Electrochemical Solid State Letters, 7 (2), A30-A 32, (2004)), the preferred second set of crystal planes generating peak 2 which is assigned to the signal with the intensity ratio I₂ are perpendicular to the (020) planes and thus the peak 2 represents the (301) crystal planes.

The texture effect in the electrode according to the invention decreases the diffusion length of Li-ions in [0k0] direction through the plurality of particles in the electrode by more than 10% compared to an electrode without such texture effect. Preferably the diffusion path is reduced by more than 25%, still more preferred by more than 50%. As a general concept in accordance with the present invention it was found that the larger the intensity ratio the shorter the overall diffusion length in the electrode.

The term "texture effect" is an expression for the distribution of crystal planes in a collection of particles. This means that the majority of the crystal planes in a plurality of particles, preferably one single set of crystal planes, is present with an increased probability. A texture effect is therefore a colligative property of a plurality of particles. It is to be noted that an isolated particle does not display such a texture effect.

The texture effect was also observed in electrodes comprising mixed (doped) phosphates like LiFe₁₋ₓM'_{y}M"_{z}M"'ᵤPO₄, which, for the purposes of the present invention, are understood to fall under the general formula LiMPO₄ indicated in the foregoing. In these mixed or doped compounds, one or more different transition metals M', M", M'" like Co, Ni, Cu, Mn, Ti etc. occupy in different concentrations and numbers the octahedral positions of the iron octahedra in the olivine structure and wherein x, y, z and u represent a number between 0 and 1 and (y+z+u) ≤ x. It is understood that also isocharge and aliovalent substitutions are comprised within the above-mentioned general formulae.

The term "particle" as used herein comprises any finely dispersed regularly or irregularly formed single particle which may be for example present in ordered or disordered crystalline, i.e. monocrystalline or polycrystalline, or in amorphous form. Most preferred, the particles consist essentially of a regular geometric monocrystal. The form of said monocrystal is not restricted to specific geometries, as far as the geometry is a regular one. Flat forms like platelets etc are, however, most preferred.

The advantage of using a platelet shape consists in that the particles can easily be aligned with additional pressure upon manufacture of the positive electrode. Applying a uniaxial force to the platelets forces the platelets to rearrange in such a manner that their faces are aligned in the direction of the applied force. Another advantage of the platelet shape is that it provides a large surface area for a particular lattice plane. It provides also a small height perpendicular to the plate. At the same time, a higher maximum packing density up to 2.5g/cm³ is obtained using the platelet particles as compared with spherical, cylindrical or irregular-shaped particles. This corresponds to a larger energy density for the electrode comprising such particles.

The platelet form forms upon pressure (see below) preferably closely packed regular or irregular stacks of platelet shaped particles, thus bringing the single particles in close contact to another. This arrangement forms a further, additional beneficial factor in decreasing the diffusion length, thereby increasing the capacity and conductivity of the electrode according to the invention. This alignment contributes to the observed texture effect compared to an electrode comprised of non-aligned particles. For example, the electrode according to the invention displays an intensity ratio I1:I2 of the two selected peaks 1 and 2 which is at least 9 fold larger compared to the intensity ratio from a X-ray diffraction chart of an electrode comprised of randomly orientated particles. Preferably the intensity is 15 fold larger (see for example also Table 3).

In the context of the present invention, it is especially important that the alignment of the lattice planes of the particles is achieved by using the flat LiFePO₄ particles with the [010] lattice direction along the normal of one of the particle surfaces. The afore-mentioned observations are not limited to LiFePO₄ and/or its doped and mixed derivatives but can also be observed with other olivine structures such as LiMnPO₄, Li-CoPO₄, LiNiPO₄, etc.

The term "crystal plane" as used herein means a set of planes within the crystal lattice. Further definitions of crystallographic terms used herein can for example found in U. F. Kocks et al., "Texture and Anisotropy", Cambridge University Press 1998.

It is preferred that the particles are coated onto a substrate upon preparation of the electrode which is also electrically conductive which enables a more facile application and alignment of the single particles. The form of the particles depends on the conditions of crystallisation which is subject to routine experimentation of a person skilled in the art. In a preferred embodiment, the particles are in the form of platelets. The size and aspect ratio of these platelets is in a first embodiment of the invention not of utmost importance to obtain the desired intensity ratio. However as a general rule, the more flat the particles are, the better for the purposes of the present invention.

It is preferred that the d50 particle size of the particles is in the range of from 10 to 0.02 µm, more preferred from 3 to 0.02 µm. A detailed description of the measurement of the d50 particle size is given in unpublished German Patent Application DE 103 53 266.8.

In a further preferred embodiment of the invention the particles have a coating which comprises carbon which is in intimate contact with the particle surface and increases the capacity and conductivity of the electrode. The effect of carbon coating is described for example in US 2004/0033360.

The positive electrode (cathode) according to the invention comprising said particles further comprises a conductive substrate, like metal foils etc. which are essentially known for such purposes in the art. Said particles are coated and aligned on the substrate, whereby the thickness of the coating of the substrate with the particles is preferably >30 µm.

Additionally, the coating further comprises carbon added during the manufacture process to further increase the conductivity of the electrode. The carbon content is preferably in the range of from 0.5 to 30 wt%, more preferred of from 1 to 10 wt% and most preferred from 2 to 5 wt% based on the total weight of the coating.

It is especially preferred that the package density of the coating is >1.2 g/cm³, more preferred >1.7 g/cm³ to safeguard an intimate contact between the particles, which enhances the lithium ion transfer capacity. Also package densities >1.2 g/cm³, more preferred >1.7 g/cm³, are preferred to obtain lithium secondary batteries which display high enough volumetric energy densities for the batteries.

The problem underlying the invention is further solved by a process for the manufacture of an electrode for use in a battery according to the invention, comprising the steps of
a) Preparing particles of LiMPO₄ with an essentially uniform and regular particle shape, optionally with a carbon coating
b) Adding carbon to the particles and mixing
c) Preparing a slurry by adding a binder and a solvent
d) Application of the slurry on a substrate
e) Drying
f) Densifying of the dried slurry by applying uniaxial pressure, wherein the densifying step aligns the particles in a preferred direction.

The densification is carried out by means of for example a platen press or a calender press or any other suitable pressing means is preferred since it ensures by the stronger alignment effect an increased physical contact of the particles compared to an electrode obtained in a process without densification. It is preferred that the pressure is a uniaxial pressure. This increases the electrical and ionic conductivity and capacity of the so-obtained electrode.

The densification step is carried out with a line pressure applied to the coating in the range of from 3000 to 9000 N/cm, preferably 5000 to 7000 N/cm. The selected range for the line pressure applied provides the desired alignment of the particles in a preferred direction and generates thus the desired electrode structure. As explained in the foregoing, the particles are preferably present in the form of platelets. The densification step was repeated up to 4 times.

In another less preferred embodiment of the process according to the invention, the densification step f) is not carried out. An alignment of the particles and also the occurrence of a "texture effect" are also observed which can be ascribed to the inherently occurring densification during the manufacturing process, when the particles are aligned within the binder. The magnitude of the texture effect is, however, smaller than the magnitude observed with densification.

The alignment and especially the densification thus increases the measured "texture effect" described in the foregoing in more detail.

The amount of carbon added in step b) of the process according to the invention is preferably in the range of from 0.2 - 30 wt % based on the total amount of carbon and the particles. It has further been found that the amount of binder in step c) is preferably in the range of from 2 to 7 wt % based on the total amount of carbon and/or binder and the particles. This amount proved to be advantageous to achieve sufficient conductivity in the electrode and thus enables retrieving the capacity of the electrodes according to the invention.

The invention is further illustrated by way of the following figures and examples which are not meant to limit the scope of the invention. It is understood that not only the specifically disclosed features of the present invention but also combinations thereof are comprised within the scope of the invention. Drawings
Fig. 1 shows a voltage curve for a lithium secondary battery of the prior art;
Fig. 2 shows a voltage curve for a lithium secondary battery according to the invention;
Fig. 3 shows an X-Ray Diffraction chart of an electrode comprising LiFePO₄ of the prior art;
Fig. 4 shows an X-Ray Diffraction chart of an electrode manufactured without final densification;
Fig. 5 shows an X-Ray Diffraction chart of an electrode manufactured with a final densification according to the invention.

### Examples

### General Remarks:

The particles of LiFePO₄ (and its doped derivatives) have an olivine structure in the space group Pnma (No. 62) with setting 1 (a = 10.332 Å, b = 6.010 Å, c = 4.694 Å). LiFePO₄ particles were obtained from Süd-Chemie AG, Germany.

For the purpose of the present invention, the intensity ratio of the two selected perpendicular peaks was determined upon selection of the signal assigned to the (020) crystal planes and the perpendicular crystal planes were the (301) planes. The (020) crystal planes were found to be always superimposed to the (211) planes which was therefore also taken into account upon calculating the intensity ratio of the (020) planes.

X-Ray diffraction (XRD) measurements were carried out on a Philips X'pert PW 3050 instrument with CuK_{α} radiation (30 kV, 30 mA) with a graphite monochromator and a variable slit.

Upon measurement of the electrode foils (substrate + particle coating), the foils are arranged tangential and flat with respect to the focussing circle according to the Bragg-Brentano condition.

Usual conditions for the manufacture of lithium batteries according to the present invention are as follows:

The binder used in the process for the manufacture of electrodes according to the invention is not specifically limited to certain classes of compounds. Any binder suitable for that purpose can be used. Representative but non-limiting examples of binders are polytetrafluoroethylene (PTFE), polyvinylidene difluoride (PVdF), polyvinylidene fluoride hexafluoropropylene copolymers, ethylene propylene diene ter-polymer (EPDM) and tetrafluoroethylene-hexafluoropropylene copolymers etc.

The carbon added in the process for the manufacture of electrodes according to the invention is not limited to specific grades, carbon sources or manufacturers thereof. Representative but non-limiting examples of carbon are graphite, acetylene black and carbon black.

Electrodes were prepared by mixing 90 parts per weight LiFePO₄ or carbon coated LiFePO₄ together with 5 parts of carbon. 5 parts of a binder were diluted in N-methyl-2-pyrrolidon solution and added to the mixture. The mixture was kneaded to give a slurry. The slurry was applied by a doctor blade to an aluminium collector foil serving as a collector. The film was dried at 60°C under reduced pressure of 500 mbar for 2 h.

A calender press was used for densification. But any other press like for example a platen press is suitable as well. The applied line pressure was in the range of from 3000 to 9000 N/cm, preferably from 5000 to 7000 N/cm. The target value for the coating (active material) packing density was >1.2 g/cm³ or higher, more preferably >1.7 g/cm³.

The electrodes were dried for 2 more hours under vacuum, preferably at elevated temperatures of about 100°C. Cells were assembled as "coffee bag" cells (batteries), which consist of an aluminium coated polyethylene bag. Lithium metal was used as the counter electrode. 1M LiPF₆ was used as electrolyte in a 1:1 mixture of ethylenecarbonate (EC):diethylcarbonate (DEC). In each battery one layer of a microporous polypropylene-foil (Celgard 2500; Celgard 2500 is a trademark) having lithium ion permeability was used as the separator. The bags were sealed using a vacuum-sealing machine.

Measurements were performed in a temperature-controlled cabinet at 20°C using a Maccor Lab tester Series 4000 battery test system. Voltage range for cycling was between 2.0 V and 4.0 V.

### Results

The characteristic properties of LiFePO₄ particles used in the manufacture of the batteries mentioned above are shown in table 1:

**Table 1: Characteristic Properties of LiFePO₄ particles**

| Sample No | d50 particle size (µm) | BET (m²/g) | Surface C (%) |
|---|---|---|---|
| 232 | 0.91 | 17 | 3.2 |
| 219 | 1.76 | 8 | 2.7 |

All particle powders were characterized by X-Ray Powder Diffraction (XRD) and showed the same peak (signal) positions in the X-Ray diffraction chart diagram. 2θ values of all peaks and their relative intensities are identical. The XRD diagrams did not show signals originating from impurities or other lithium-iron-phosphate phases.

Electrodes were prepared from each particle sample according to the general process as described in the foregoing. The film thickness obtained and the density of the active material calculated for the LiFePO₄ electrodes is given in table 2:

**Table 2: Cell characteristics**

| Sample No | Cell name | Density (g/cc) | Film thickness d(µm) |
|---|---|---|---|
| 232 | FB087 | 2.11 | 61 |
| 219 | FB560 | 2.28 | 60 |

The particles and the electrodes obtained from the different particle powders were characterized by XRD analysis.

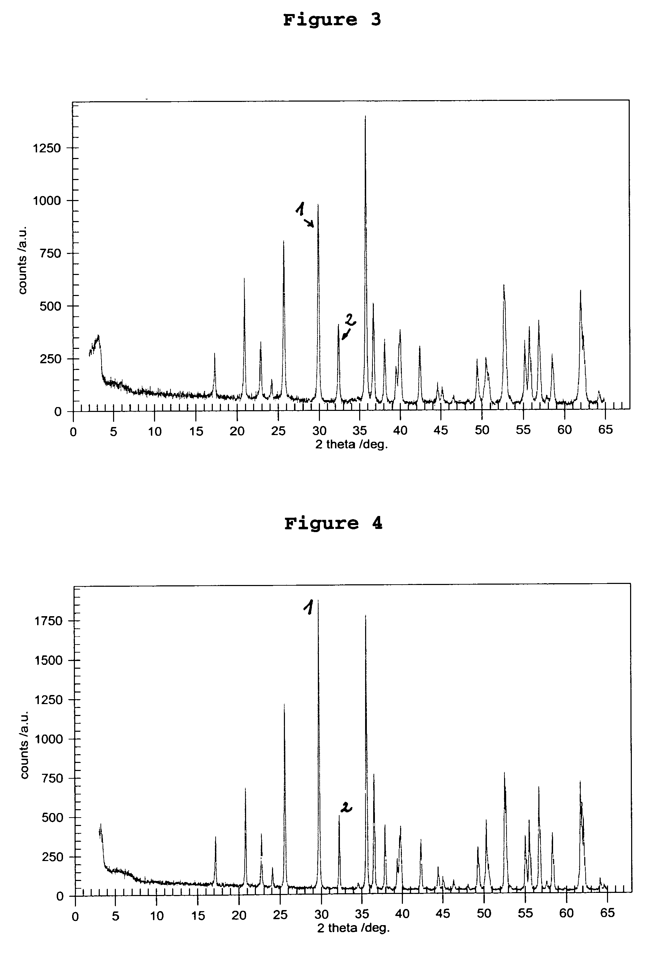

Figure 3 (sample No. 232) shows an X-Ray diffraction chart of an electrode manufactured with conventional LiFePO₄ particles and without densification which shows no texture effect for the corresponding peaks 1 and 2. Peak 1 has an intensity I₁ and peak 2 has an intensity I₂.

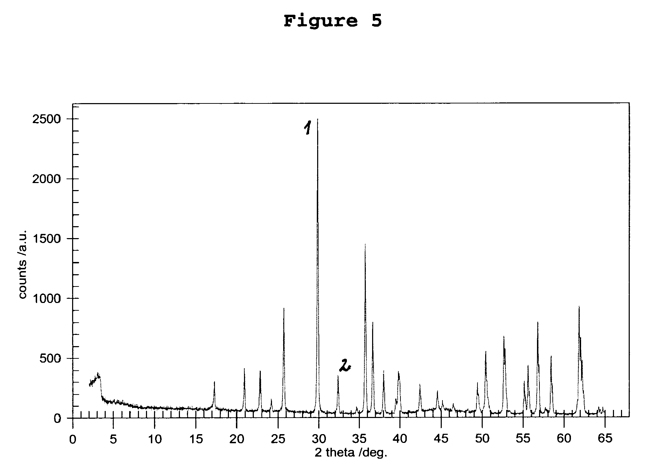

The position and the intensity of the XRD signals for sample 219 measured as a manufactured electrode made without further (final) densification step (figure 4) and with densification step (figure 5) are identical to those found in prior art (see e.g. Chichagov A.V. et al. Information-Calculating System on Crystal Structure Data of Minerals (MINCRYST) - Kristal-lographiya, v.35, n.3, 1990, p.610-616).

As can be seen from the diagrams in figures 4 and 5, electrodes made from sample No. 219 showed a marked difference in signal intensity before (figure 4) and after (figure 5) densification. All signals have the same 2θ values. Figure 4 shows an intensity ratio of the selected peaks 1 (020 + 211) and 2 (301) of 9:1. Figure 5, which was recorded after densification, showed an intensity ratio of these two peaks 1 and 2 of I₁ (020 + 211) to I₂ (301) of 23:1. This texture effect is responsible for the increased conductivity and capacity of the electrodes in a battery according to the invention.

Table 3 indicates the difference in the intensity ratio before and after the densification step for various samples which confirms the aforementioned findings:

**Table 3: Change in intensity ratio with and without densification of the electrodes**

| Sample No | Intensity ratio I₁(020 + 211)/I₂ (301) | Intensity ratio I₁(020 + 211)/I₂ (301) |
|---|---|---|
| | Electrode without further densification | Electrode with densification |
| 232 | 2.6 / 1 | 3.9 / 1 |
| 219 | 7.7 / 1 | 23 / 1 |

The cells with the electrodes obtained from the particle samples were electrochemically characterized by measuring their respective capacities.

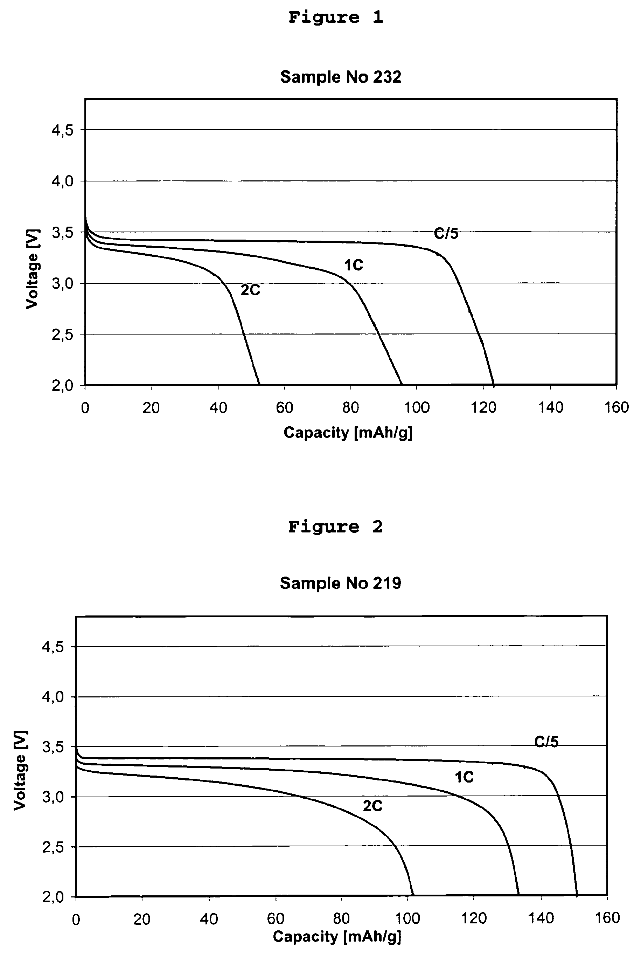

The capacities obtained by cycling at C/5, 1C and 2C rate are listed in table 4 and are shown in figures 1 and 2. Figure 1 shows the capacities as measured with cells comprising electrodes manufactured with material from sample No 232. The capacity of a cell according to the invention is shown in figure 2 (sample No 219).

**Table 4: Capacities of various cells**

| Sample No | Cell name | C/5 | C | 2C |
|---|---|---|---|---|
| 232 | FB087 | 123 | 95 | 50 |
| 219 | FB560 | 151 | 134 | 103 |

As can be seen from the values in table 4 and the figures 1 and 2, the cell FB 560 (figure 2) according to the invention made from sample No 219 has highly superior capacities, especially at high rates, in comparison to the cell obtained with material from sample No 232 (figure 1).

This effect may be ascribed to minimized diffusion paths inside the solid and to a maximized electrochemically active surface. Therefore the capacity increases dramatically at high rate.

## Claims

1. Positive electrode for a rechargeable lithium ion battery comprised of single particles containing a compound of the formula LiMPO₄, whereby M is a metal selected from the group consisting of Co, Ni, Mn, Fe, Ti or combinations thereof, and whereby in a X-Ray diffraction chart of the electrode the intensity ratio I₁ : I₂ of two selected peaks 1 and 2 is larger than 9:1 and wherein I₁ represents essentially the intensity of peak 1 assigned to the (020) planes and I₂ represents the intensity of peak 2 assigned to the (301) planes.

2. Electrode according to claim 1, wherein the intensity ratio is larger than 15:1, preferably larger than 20:1.

3. Electrode according to claim 1 or 2, wherein LiMPO₄ represents LiFePO₄.

4. Electrode according to one of the preceding claims, wherein the d50 particle size of the single particles is in the range of from 10 to 0.02 µm.

5. Electrode according to claim 4, wherein the particles have an additional carbon coating on their surface.

6. Electrode according to one of the preceding claims, wherein the particles are coated on a substrate and whereby the coating thickness is >30 µm.

7. Electrode according to claim 6, wherein the package density of the coating is >1,2 g/cm³, preferably >2,0 g/cm³.

8. Electrode according to one of the preceding claims, wherein the particles are aligned in the form of regular or irregular stacks.

9. Lithium secondary ion battery comprising a negative electrode, a positive electrode according to any of the preceding claims and an electrolyte.

10. Process for the manufacture of a positive electrode for use in a battery according to claim 9, comprising the steps of
a) Preparing particles of LiMPO₄, whereby M is a metal selected from the group consisting of Co, Ni, Mn, Fe or combinations thereof, with an essentially uniform platelet shape, optionally with a carbon coating
b) Adding carbon to the particles and mixing
c) Preparing a slurry by adding a binder and a solvent
d) Applying the slurry on a substrate
e) Drying
f) Densifying the dried slurry by applying uniaxial pressure
**characterized in that** the densifying step f) aligns the particles in a preferred orientation.

11. Process according to claim 10, wherein the amount of carbon added in step b) is in the range of from 0.2 - 30 wt % based on the total amount of carbon and the particles.

12. Process according to claim 10 or 11, wherein the amount of binder in step c) is in the range of from 2 to 7 wt % based on the total amount of carbon and/or binder and the particles.

13. Process according to one of the preceding claims, whereby the line pressure applied in step f) is in the range of from 3000 to 9000 N/cm, preferably in the range of from 5000 to 7000 N/cm.
